Europäisches Patentamt

European Patent Office

Office européen des brevets

(11) Veröffentlichungsnummer: **0 179 362**
**A2**

(12) # EUROPÄISCHE PATENTANMELDUNG

(21) Anmeldenummer: 85112877.7

(22) Anmeldetag: 11.10.85

(51) Int. Cl.⁴: **C 05 F 9/02**

(30) Priorität: 26.10.84 DE 8431486 U
02.04.85 DE 8509852 U

(43) Veröffentlichungstag der Anmeldung:
30.04.86 Patentblatt 86/18

(84) Benannte Vertragsstaaten:
AT BE CH DE FR GB IT LI

(71) Anmelder: Lescha Maschinenfabrik GmbH
Ulmer Strasse 249-251
D-8900 Augsburg(DE)

(72) Erfinder: Kienle, Franz
Kammerfeld 14
D-8901 Zusmarshausen(DE)

(74) Vertreter: Munk, Ludwig, Dipl.-Ing.
Patentanwalt Prinzregentenstrasse 1
D-8900 Augsburg(DE)

(54) Vorrichtung zur Kompostierung organischer Abfälle.

(57) Bei einer Vorrichtung zur Kompostierung organischer Abfälle mittels einer um ihre horizontale Achse drehbaren, mit Belüftungsöffnungen versehenen Trommel, deren Mantel eine verschließbare Einfüllöffnung besitzt und deren Stirnseiten achsmittige Wellenstummel aufweisen, die von Gestellteilen getragen werden, wird dadurch, daß die Belüftungsöffnungen (8) durch eine Vielzahl von Öffnungen des Mantels (7) der Trommel (2) gebildet werden, erreicht, daß bei höchst einfachem Aufbau der Vorrichtung diese laufend mit neuen Abfällen gefüllt werden kann und bei guter Belüftung allein die verrotteten Abfälle aus der Trommel austreten.

FIG 1

EP 0 179 362 A2

## Vorrichtung zur Kompostierung
## organischer Abfälle

Die Erfindung betrifft eine Vorrichtung zur Kompostierung organischer Abfälle mittels einer um ihre horizontale Achse drehbaren, mit Belüftungsöffnungen versehenen, Trommel, deren Mantel eine verschließbare Einfüllöffnung besitzt und deren Stirnseiten achsmittige Wellenstummel aufweisen, die von Gestellteilen getragen werden.

Eine solche Vorrichtung ist der DE-A 25 20 723 entnehmbar. In den Mantel der Trommel ist in eine dort vorgesehene Ausnehmung eine domartige Belüftungs- und Drainageeinheit eingesetzt, die Belüftungsöffnungen aufweist. Die Ausnehmung im Trommelmantel ist durch ein Fliegengitter abgedeckt. Diametral zu dieser Belüftungs- und Drainageeinheit weisen die Stirnseiten der Trommel eine ebenfalls durch ein Fliegengitter abgedeckte Öffnung auf.

Das über die Einfüllöffnung in die Trommel eingebrachte Material wird nach dessen Verrottung über diese Einfüllöffnung wieder entfernt. Die Trommel soll einmal täglich gewendet werden. In den Pausen zwischen dem Wenden muß die Trommel eine Stellung einnehmen, bei welcher die Belüftungs- und Drainageeinheit nach unten weist.

0179362

- 2 -

Diese bekannte Vorrichtung weist eine Reihe von Nachteilen auf. Die Belüftung der Trommel ist mangelhaft
und wird noch zusätzlich beim Gebrauch dadurch verschlechtert, daß die Fliegengitter verstopfen. Hierdurch geht der aerobe Abbau, der zu einer Verrottung
führt, über in einen anaeroben Abbau, der zu Fäulnisbildung und damit zur Geruchsbelästigung führt, da die
Sauerstoffzufuhr mangelhaft ist. Wegen dieses anaeroben
Abbaus sind auch die Fliegengitter erforderlich, da
Fliegen durch den Fäulnisgeruch angezogen werden. Bei
einem aeroben Abbau dagegen tritt diese Geruchsentwicklung nicht auf. Von weiterem Nachteil ist, daß die
Belüftungs- und Drainageeinheit nach unten weisen muß,
da sonst eine Belüftung der in der Trommel befindlichen
Abfälle nicht möglich ist. Ein weiterer Nachteil ist
darin zu sehen, daß die Belüftungs- und Drainageeinheit
über die Oberfläche des Mantels übersteht. Hierdurch ist
erforderlich, daß ein entsprechend großer Abstand zwischen der Trommel und dem die Trommel tragenden Gestell
vorhanden sein muß, da sonst eine Drehung der Trommel
nicht möglich ist. Letztlich ist von Nachteil, daß über
die Einfüllöffnung verrottetes, teilweise verrottetes
und auch unverrottetes Material ausgebracht wird, so
daß das verrottete Material vom unverrotteten und vom
teilweise verrotteten Material abgesiebt werden muß. Es
ist also nicht möglich, die Trommel laufend mit neuen
Abfällen zu füllen, ohne zuvor die Trommel entleert zu
haben.

Es besteht daher die Aufgabe, die gattungsgemäße Vorrichtung so auszubilden, daß bei möglichst einfachem Aufbau
der Vorrichtung diese laufend mit neuen Abfällen gefüllt werden kann und bei guter Belüftung allein die verrotteten Abfälle aus der Trommel austreten.

Gelöst wird diese Aufgabe mit den Merkmalen des Anspruchs 1. Vorteilhafte Ausgestaltungen sind den Unteransprüchen entnehmbar.

Ausführungsbeispiele werden nachfolgend anhand der Zeichnung näher erläutert.

In der Zeichnung zeigen:

Figur 1          eine perspektivische Darstellung einer ersten Ausführungsform,

Figur 2          eine perspektivische Teildarstellung einer zweiten Ausführungsform,

Figur 3          einen Schnitt durch die Kompostierungstrommel,

Figur 4          eine erste Ausführungsform der Öffnungen,

Figur 5          eine zweite Ausführungsform der Öffnungen und

Figur 6          eine dritte Ausführungsform dieser Öffnungen.

Die um ihre horizontale Achse 1 drehbare Trommel 2 weist zwei geschlossene Stirnseiten 3 auf. Über die Stirnseiten 3 stehen jeweils Wellenstummel 4 über. Diese Wellenstummel 4 können entweder mit den geschlossenen Stirnseiten 3 verschweißt sein oder es handelt sich um die Enden einer durch die Trommel hindurchgehenden Welle. Diese Wellenstummel 4 sind drehbar gelagert in Lagermuffen 5. Jede Lagermuffe 5 stellt den oberen Teil eines dreieckförmigen Lagerbocks 6 dar. Die Lagerböcke 6 bestehen aus Flachmaterial, dessen Flachseiten parallel zur Achse 1 verlaufen.

Der Mantel 7 der Trommel besteht aus einem Lochblech mit einer Vielzahl von Belüftungsöffnungen 7'. Dieser Mantel 7 besitzt eine Einfüllöffnung 8, welche durch eine Klappe 9 verschließbar ist.

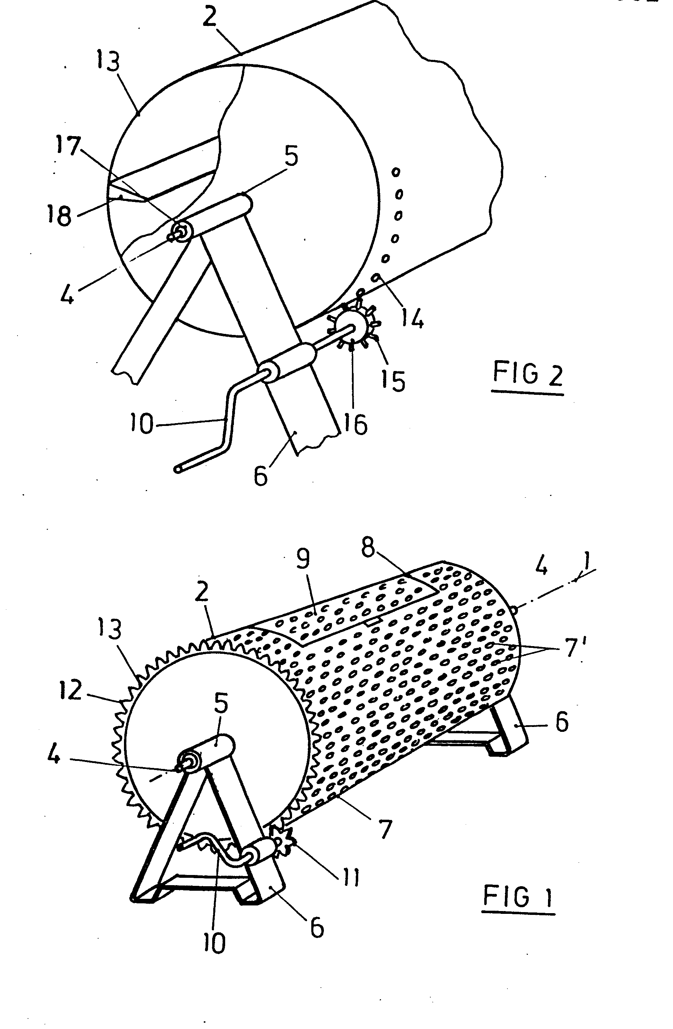

An einem der Lagerböcke 6 ist eine Handkurbel 10 gelagert. Diese Handkurbel 10 trägt bei der Ausführung gemäß Figur 1 ein Zahnritzel 11, welches in Eingriff steht mit einem Zahnkranz 12 der Trommel 2, der am dortigen stirnseitigen Rand der Trommel 2 angeordnet ist. Anstelle einer Handkurbel kann auch ein Elektromotor mit Untersetzungsgetriebe vorgesehen sein, dessen Antriebswelle das Ritzel 11 trägt.

Organische Abfälle werden über die Öffnung 8 in das Trommelinnere verbracht. Durch die Einwirkung von Mikroorganismen findet bei ausreichender Sauerstoffzufuhr über den aus einem Lochblech bestehenden Mantel 7 ein aerober Abbau der organischen Abfälle statt. Durch gelegentliches Drehen der Trommel mittels der Handkurbel 7 wird ein Verdichten der Abfälle und damit ein anaerober Abbau, der zu einer Geruchsbildung führen könnte, vermieden. Ausreichend verrottetes Material fällt durch die Öffnungen 7' des Mantels 7 hindurch. In die Trommel 2 kann stets neuen Abfallmaterial eingebracht werden, d. h. im Inneren der Trommel 2 kann sich unverrottetes, teilweise verrottetes und vollständig verrottetes Material befinden. Ausreichend verrottetes Material fällt stets über die Öffnungen im Mantel 7 nach unten.

Handelt es sich um trockene organische Abfälle, dann gegübt es zur Einleitung des Abbaus, daß die Trommel 2 mit einem Gartenschlauch bespritzt wird.

Unterhalb der Trommel 2 kann ggf. ein Auffangblech vorgesehen werden.

Ein Absieben des aus der Trommel 2 herausfallenden, verrotteten Materials ist nicht erforderlich, da das Lochblech des Mantels 7 bereits als Sieb wirkt. Es können somit Materialien verrottet werden, deren Verrottungszeit unterschiedlich lang ist.

Gemäß der Ausführungsform der Figur 2 sind am stirnseitigen Rand 13 der Trommel 2 Bohrungen 14 vorgesehen, die in Umfangsrichtung gesehen gleichmäßig angeordnet sind. Diese Bohrungen 14 stehen in Eingriff mit Mitnehmerzapfen 15 des Antriebsrades 16, das am Lagerbock 6 drehbar gelagert ist und in der Handkurbel 10 endet. In Figur 2 ist auch dargestellt, daß der Wellenstummel 4 eine axiale Sicherung 17 aufweist, die den Wellenstummel 4 axial gegenüber der Lagermuffe 5 sichert.

Wie der Figur 2 zusätzlich zu entnehmen ist, können an der Mantelinnenseite Mitnehmer vorgesehen sein, beispielsweise in Form der Mitnehmerleiste 18. Eine solche Mitnehmerleiste 18 verhindert, daß beim Drehen der Trommel das im Inneren der Trommel 2 befindliche Material umgewälzt wird.

Die Trommel 2 und die Lagerböcke 6 können von einem Gestell umgeben sein, das eine luftdurchlässige Plane trägt.

Die Belüftungsöffnungen 7' weisen bevorzugt einen Durchmesser von etwa 16 mm bis 24 mm auf, was eine gute Belüftung des Trommelinhalts ergibt und gleichzeitig einer Verstopfung der Belüftungsöffnungen 7' entgegenwirkt.

Wird jedoch in eine Trommel mit derartig dimensionierten Belüftungsöffnungen Häckselgut eingefüllt, das relativ fein zerkleinert ist, dann besteht die Gefahr, das ein solches Häckselgut unverrottet oder nur teilweise verrottet beim Drehen der Kompostierungstrommel über die Öffnungen auszutreten vermag.

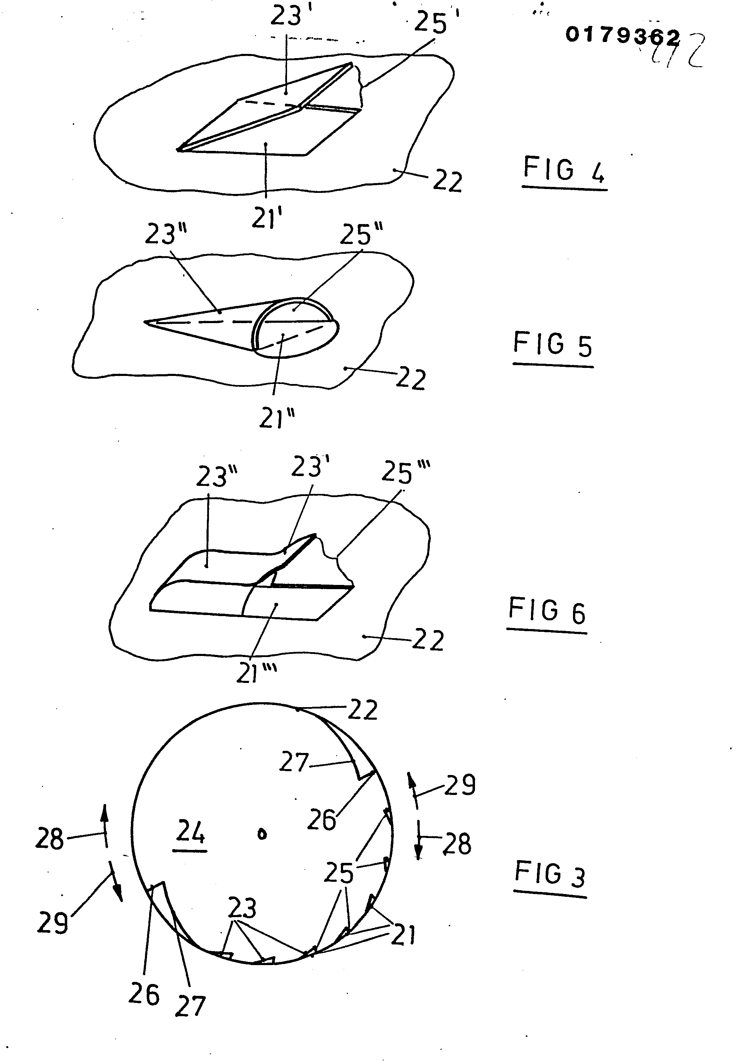

Um dies zu verhindern werden, wie Figur 3 zeigt, zumindest die meisten, vorzugsweise alle Öffnungen 21 in der Trommelwand 22 jeweils von einem Wandungsteil 23 schuppenförmig übergriffen. Die Wandungsteile 23 sind in Umfangsrichtung der Trommelwand 22 gesehen gleich verlaufend ins Innere 24 der Trommel gerichtet. Diese Wandungsteile 23 begrenzen mit ihrem freien, in das Trommelinnere weisenden Ende zusammen mit dem benachbarten Öffnungsrand jeweils eine zweite etwa radial verlaufende Öffnung 25. Weiterhin sind an der Trommelinnenwand zwei radial verlaufende Flügel 26 vorgesehen. Diese Flügel 26 weisen zur Trommelwand 22 verlaufende Abflachungen 27 auf, deren Verlauf entgegegesetzt ist zum Verlauf der schuppenförmig angeordneten Wandungsteile 23.

Soll ein Mischen des Inhalts der Kompostierungstrommel stattfinden, dann wird die Trommel in Pfeilrichtung 28 gedreht. Das Füllgut wird hierbei durch die Flügel 26 mitgenommen und durchmischt, vermag bei dieser Drehrichtung jedoch nicht aus den Öffnungen 21 auszutreten, da diese Öffnungen 21 von den Wandungsteilen 23 abgedeckt sind. Die Abflachungen 27 bewirken hierbei, daß das umgewälzte Material gleichmäßig über die Wandungsteile 23 gleitet. Soll jedoch das Material ausgesiebt werden, dann wird die Trommel im Gegenuhrzeigersinn in Pfeilrichtung 9 gedreht. Das verrottete Material vermag dann über die Öffnungen 25 auszutreten. Die Abflachungen 27 dienen hierbei dazu, daß das Material gleichförmig gegen die Öffnungen 25 wandert.

Die Öffnungen 21 und die sie überdeckenden Wandungsteile 23 können eine Vielzahl von Formen aufweisen. Drei Ausfürungsbeispiele sind in den Figuren 4 bis 6 dargestellt.

Bei der Ausführungsform nach Figur 4 wird die Öffnung 21' gebildet durch eine Ausstanzung, bei der an drei Seiten eine Zunge 23' ausgestanzt und in Richtung des Trommelinneren 24 abgebogen wird. Diese Zunge 23' überdeckt die Öffnung 21' zum Großteil. Die weitere Öffnung 25' wird gebildet durch das freie Ende der Zunge 23' und dem benachbarten Rand der Öffnung 21'.

Bei der Ausführungsform gemäß Figur 5 wird die Öffnung 21'' gebildet durch eine in das Trommelinnere 24 gerichtete Auswölbung 23''. Der Öffnungsrand, der dem vorderen

Rand der Auswölbung 23'' benachbart ist, kann geradlinig verlaufen, wie durch die gestrichelte Linie dargestellt ist, oder er kann Reißform aufweisen. Die weitere Öffnung ist mit 25'' bezeichnet.

Die Ausführungsform nach Figur 6 stellt eine Kombination der Ausführungsform nach Figur 4 und 5 dar. Die Öffnung 21''' wird einmal übergriffen durch eine Auswölbung 23'' und durch eine an die Auswölbung 23'' sich anschließende Zunge 23'. Die weitere Öffnung 25 ''' wird gebildet zwischen der Zunge 23' und dem benachbarten Rand der Öffnung 21 '''.

Patentansprüche

1. Vorrichtung zur Kompostierung organischer Abfälle mittels einer um ihre horizontale Achse drehbaren, mit Belüftungsöffnungen versehenen Trommel, deren Mantel (2) eine verschließbare Einfüllöffnung (8) besitzt und deren Stirnseiten achsmittige Wellenstummel (4) aufweisen, die von Gestellteilen getragen werden, dadurch gekennzeichnet, daß die Belüftungsöffnungen durch eine Vielzahl von Öffnungen des Mantels (7) der Trommel (2) gebildet werden.

2. Vorrichtung nach Anspruch 1, dadurch gekennzeichnet, daß der die Belüftungsöffnungen, die vorzugsweise einen Durchmesser von etwa 16 mm bis 24 mm aufweisen, enthaltende Mantel (7) aus Lochblech besteht.

3. Vorrichtung nach einem der vorhergehenden Ansprüche, dadurch gekennzeichnet, daß die Gestellteile aus Lagermuffen (5) für die in axialer Richtung gesicherten Wellenstummel (4) tragenden, vorzugsweise dreieckförmigen Böcken (6) bestehen, die vorzugsweise aus Flachmaterial bestehen, dessen Flachseiten achsparallel verlaufen, und daß einer dieser Böcke (6) ein vorzugsweise mit einer Handkurbel (10) verbundenes Antriebsrad (11, 16) lagert, das in Eingriff mit dem dortigen stirnseitigen Rand (13) der Trommel (2) steht.

4. Vorrichtung nach einem der vorhergehenden Ansprüche, dadurch gekennzeichnet, daß der eine stirnseitige Rand (13) der Trommel (2) einen Zahnkranz (12) aufweist und das Antriebsrad aus einem Zahnritzel (11) besteht.

5. Vorrichtung nach einem der vorhergehenden Ansprüche 1 bis 3, dadurch gekennzeichnet, daß der eine stirnseitige Rand (13) der einen kreisförmigen Querschnitt aufweisenden Trommel (2) einen Kranz von in Umfangsrichtung gleichmäßig angeordneten Bohrungen (14) aufweist, die in Eingriff stehen mit entsprechend angeordneten Mitnehmerzapfen (15) des Antriebsrads (16).

6. Vorrichtung nach einem der vorhergehenden Ansprüche, dadurch gekennzeichnet, daß zumindest die Mehrzahl der Belüftungsöffnungen (21) von jeweils einem Wandungsteil (23) mindestens teilweise schuppenförmig übergriffen wird und daß diese Wandungsteile (23) der Trommelwand (22) gesehen gleich verlaufend ins Innere (24) der Trommel (2) gerichtet sind.

7. Vorrichtung nach Anspruch 6, dadurch gekennzeichnet, daß die Wandungsteile (23) einstükig zur Trommelwand (22) sind und ihr freies, in das Trommelinnere (24) weisendes Ende mit dem benachbarten Öffnungsrand eine zweite, etwa radial verlaufende Öffnung (25) bilden.

8. Vorrichtung nach einem der vorhergehenden Ansprüche 4 bis 7, dadurch gekennzeichnet, daß die Wandungsteile (23) aus vorzugsweise ausgestanzten Zungen (23') bestehen.

9. Vorrichtung nach einem der vorhergehenden Ansprüche 6 bis 7, dadurch gekennzeichnet, daß die Wandungsteile (23) durch Auswölbungen (23'') gebildet werden, wobei der Öffnungsrand, der sich an das in das Trommelinnere (24) weisende Ende der Aufwölbung (23'') anschließt, vorzugsweise Kreisform aufweist.

10. Vorrichtung nach einem der vorhergehenden Ansprüche 6 bis 9, dadurch gekennzeichnet, daß an der Trommelwand (22) mindestens ein Mitnehmer (18 bzw. 26), vorzugsweise in Form eines radial verlaufenden Flügels (26) vorgesehen ist, der von seinem inneren Rand in eine zur Trommelwand (22) verlaufende Abflachung (27) übergeht, deren Verlauf entgegengesetzt zum Verlauf der schuppenförmigen Wandungsteile (23) ist.

0179362

FIG 2

FIG 1

0179362

FIG 4

FIG 5

FIG 6

FIG 3